# EUROPÄISCHE PATENTSCHRIFT

(11) **EP 2 936 259 B1**
(45) Veröffentlichungstag und Bekanntmachung des Hinweises auf die Patenterteilung: **12.06.2019**
(21) Anmeldenummer: 14708008.9
(22) Anmeldetag: 04.03.2014
(51) Int. Cl.: G05B 19/042, H04L 9/32, H04L 29/06, G06F 21/33, G06F 21/57, G06F 21/64, G06F 21/44

(54) **AKTUALISIEREN EINES DIGITALEN GERÄTE-ZERTIFIKATS EINES AUTOMATISIERUNGSGERÄTS**
UPDATING OF A DIGITAL DEVICE CERTIFICATE OF AN AUTOMATION DEVICE
ACTUALISATION D'UN CERTIFICAT D'APPAREIL NUMÉRIQUE D'UN APPAREIL D'AUTOMATISATION

(30) Priorität: 21.03.2013 DE 102013205051
(43) Veröffentlichungstag der Anmeldung: 28.10.2015
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2014/054139
(87) Internationale Veröffentlichungsnummer: WO 2014/146895

(56) Entgegenhaltungen:
- EP-A1- 1 521 148
- DE-A1-102007 014 782
- DE-A1-102011 081 803
- DE-A1-102011 081 804
- US-B1- 7 861 085

## Beschreibung

Die Erfindung bezieht sich auf ein Verfahren zum Aktualisieren eines digitalen Geräte-Zertifikats, bei dem sich das Automatisierungsgerät mittels mindestens eines Geräte-Zertifikats gegenüber einem Authentisierungspartner authentisiert und das Geräte-Zertifikat mit gerätespezifischen Konfigurationsdaten des Automatisierungsgeräts assoziiert werden kann, sowie auf ein Automatisierungsgerät und ein System zum Aktualisieren eines digitalen Geräte-Zertifikats.

Sicherheits-Berechtigungsnachweise, insbesondere digitale Zertifikate oder ein Sicherheits-Token werden benötigt, um Sicherheits-Mechanismen nutzen zu können. Eine SicherheitsInfrastruktur stellt solche Sicherheits-Berechtigungsnachweise bereit. In Automatisierungsanlagen werden von Automatisierungsgeräten, zum Beispiel intelligente Feldgeräte oder Steuerrechner, zunehmend Zertifikate zur Authentisierung oder auch zum Aushandeln von Sicherheitsparametern zum Schutz der Kommunikation zwischen Automatisierungsgeräten oder anderen Authentisierungspartnern eingesetzt.

Die US 7 861 085 B1 offenbart ein System und ein Verfahren um automatisiert die Herstellungsprozesse in einer regulierten Industriesteuerungsumgebung zu erleichtern, indem eine zentralisierte Signierungskomponente Signierungsereignisse generiert, an abgesetzte Bereiche überträgt und anschließend die angeforderten Signaturen validiert. Wird die Änderung eines Parameters oder einer Systemvariable angefordert, wird diese Anforderung an den Server gemeldet. Dort wird durch eine Signatur und Verifizierungskomponente festgestellt, ob der geänderte Parameter durch eine Signatur verifiziert werden muss. Nach einer Verifizierung kann der aktuelle Parameterwechsel auf einen Webserver oder auf einen Steuerungssystem initiiert werden.

Ein digitales Zertifikat, beispielsweise nach X.509v3, ist eine mit einer digitalen Signatur geschützte Datenstruktur, die einen öffentlichen Schlüssel manipulationsgeschützt an gewisse Attribute wie zum Beispiel Name, Land, Organisation, bindet. In der Praxis werden digitale Zertifikate von einer Zertifizierungsstelle ausgestellt. Ein Nutzer sendet dazu eine Anfrage an die Zertifizierungsstelle, beziehungsweise eine Registrierungsstelle. Die Zertifikats-Anfrage ist üblicherweise durch ein Passwort, durch eine kryptographische Prüfsumme, durch eine Signatur oder Ähnliches geschützt, sodass nur der berechtigte Nutzer für sich ein Zertifikat anfordern kann.

Aus der DE 10 2011 081 804 A1 ist ein Geräte-Zertifikat mit gerätespezifischen Konfigurationsinformationen bekannt. Neben Informationen zur Identifizierung des Geräts wie Hersteller, Modell, Seriennummer, Herstellungsdatum, Modellversion, enthält ein solches digitales Geräte-Zertifikat weitere Informationen, die von der Konfiguration des Gerätes abhängen. Dies sind zum Beispiel Informationen zum Firmware-Versionsstand und/oder zu einem Konfigurationsstand mit beispielsweise länderspezifischen Versionen und/oder zu unterstützten Optionen und/oder Features. Auch können Informationen zu zumindest einer Nutzer-konfigurierbaren Konfiguration enthalten sein.

Die Verbindung der Konfigurationsdaten mit einem Geräte-Zertifikat kann auf verschiedene Weise erfolgen. In einem Fall können die Konfigurationsdaten explizit in das Geräte-zertifikat kodiert sein. In einem anderen Fall können diese Daten in einem Attributzertifikat enthalten sein, das an das Geräte-Zertifikat gebunden ist. In einem weiteren Fall enthält das Geräte-Zertifikat nicht explizit die Konfigurationsdaten, sondern eine Referenz auf die Konfigurationsdaten.

Bei der Authentisierung eines Automatisierungsgeräts wird beispielsweise überprüft, ob dessen in seinem Geräte-Zertifikat enthaltenen oder referenzierten gerätespezifischen Konfigurationsdaten einer erwarteten Gerätekonfiguration entsprechen. Ist dies nicht der Fall, kann eine Kommunikation mit dem Automatisierungsgerät verweigert werden. Es können beispielsweise bei einer Übermittlung von Messdaten eines ersten Automatisierungsgeräts an ein zweites Automatisierungsgerät bei der Authentisierung des ersten Automatisierungsgeräts dessen mit dem Zertifikat verbundenen gerätespezifischen Konfigurationsdaten ausgewertet werden und die gelieferten Messdaten entsprechend interpretiert werden, z.B. ein Genauigkeitsgrad den Messdaten zugeordnet werden.

Unterschiedlichste Prozesse wie beispielsweise eine Aktivierung eines Gerätemerkmals durch das Betriebspersonal oder eine Umstellung der Länderkennung können zu einer Änderung der Konfiguration des Automatisierungsgeräts führen. Eine korrekte Auswertung der gerätespezifischen Konfigurationsdaten ist dann jedoch nicht mehr möglich.

Es ist somit die Aufgabe der vorliegenden Erfindung, ein Verfahren, ein Automatisierungsgerät sowie ein System zu schaffen, mit dem konfigurationsspezifische Sicherheits-Berechtigungsnachweise, insbesondere digitale Geräte-Zertifikate, bei Änderung der Gerätekonfiguration einfach nachgeführt und verwaltet werden können. Dies soll einfach und auch für eine große Anzahl von Geräten möglich sein.

Die Aufgabe wird durch das erfindungsgemäße Verfahren gemäß Anspruch 1, das erfindungsgemäße Automatisierungsgerät gemäß Anspruch 14 und das erfindungsgemäße System gemäß Anspruch 16 gelöst. In den Unteransprüchen sind vorteilhafte Weiterbildungen des erfindungsgemäßen Verfahrens, des erfindungsgemäßen Automatisierungsgeräts und des erfindungsgemäßen Systems dargestellt.

Bei dem erfindungsgemäße Verfahren zum Aktualisieren eines digitalen Geräte-Zertifikats eines Automatisierungsgeräts einer Automatisierungsanlage authentisiert sich das Automatisierungsgerät mittels mindestens eines Geräte-Zertifikats gegenüber einem Authentisierungspartner. Das Geräte-Zertifikat ist dabei mit gerätespezifischen Konfigurationsdaten des Automatisierungsgeräts verbunden. Nach oder bei einer Änderung der Konfiguration des Automatisierungsgeräts wird erfindungsgemäß vom Automatisierungsgerät ein aktualisiertes Geräte-Zertifikat mit gerätespezifischen Konfigurationsdaten entsprechend der geänderten Konfiguration des Automatisierungsgeräts ermittelt und nachfolgend zum Authentisieren verwendet.

Dies ermöglicht es, auch aktualisierte gerätespezifische Konfigurationsdaten dem Authentisierungspartner mitzuteilen. Durch die im Zertifikat übermittelten oder referenzierten Konfigurationsdaten kann der Authentisierungspartner davon ausgehen, dass es sich dabei um tatsächlich vorhandene Konfigurationsdaten handelt und beispielsweise seinen eigenen Betriebsmodus an die Konfiguration des sich authentisierenden Automatisierungsgeräts anpassen. Liefert beispielsweise die aktuelle Gerätekonfiguration genauere Messdaten, so kann diese Information vom Authentisierungspartner ausgewertet und die Zuverlässigkeitsangabe der Messdaten erhöht werden. Es kann aber auch die mitgelieferte, gerätespezifische Konfiguration verwendet werden, um einen zuverlässigen, manipulationsgeschützten Nachweis zur verwendeten Gerätekonfiguration bzw. der gesamten Historie von verwendeten Gerätekonfiguration bereitzustellen.

In einer vorteilhaften Ausführungsform des Verfahrens weist das Automatisierungsgerät mehrere vordefinierte Geräte-Zertifikate mit unterschiedlichen zugeordneten gerätespezifischen Konfigurationsdaten auf. Das Automatisierungsgerät wählt dann das Geräte-Zertifikat mit gerätespezifischen Konfigurationsdaten entsprechend der geänderten Konfiguration des Automatisierungsgeräts aus. Dies ermöglicht eine sehr schnelle Reaktion des Automatisierungsgeräts auf eine Konfigurationsänderung, da die bereits vordefinierten Zertifikate für verschiedene Gerätekonfigurationen bereits vordefiniert im Automatisierungsgerät vorhanden sind. Dadurch kann auch eine Einschränkung der Konfiguration des Automatisierungsgeräts bewirkt werden, indem lediglich solche Konfigurationen erlaubt sind, zu denen ein Geräte-Zertifikat mit den entsprechenden gerätespezifischen Konfigurationsdaten vorhanden ist.

In einer vorteilhaften Ausführungsform weist das Automatisierungsgerät eine integrierte Ausstellungseinheit auf, wobei die Ausstellungseinheit ein Geräte-Zertifikat mit gerätespezifischen Konfigurationsdaten entsprechend der geänderten Konfiguration des Automatisierungsgeräts ausstellt. Dies ermöglicht es sehr variabel Geräte-Zertifikate zu den unterschiedlichsten Konfigurationen zeitnah zu erstellen.

Vorteilhaft ist es dabei, wenn das Geräte-Zertifikat in einem beliebigen Betriebsmodus des Automatisierungsgeräts ausgestellt werden kann. Dies erlaubt es, bei einer Konfigurationsänderung diese Konfigurationsänderung in einem neuen Geräte-Zertifikat einzubringen und ohne Unterbrechung des Betriebs die geänderte Konfiguration den Authentisierungspartnern mitzuteilen. Dies ermöglicht eine besonders hohe Flexibilität bei geänderten Konfigurationen.

Eine ebenfalls vorteilhafte Ausführungsform ist, das Geräte-Zertifikat lediglich an einen bestimmten Betriebsmodus gekoppelt auszustellen. Damit kann sichergestellt werden, dass eine Konfigurationsänderung zu einer festgelegten Zeit, beispielsweise beim Start-Vorgang des Automatisierungsgeräts aktiviert wird, und gleichzeitig ein neues Geräte-Zertifikat erzeugt wird. Fälschlich während des Betriebs als Konfigurationsänderung interpretierte Handlungen führen damit nicht zu einem eventuell falschen Geräte-Zertifikat, das also mit falschen Konfigurationsdaten verbunden wäre.

In einer Ausführungsform des erfindungsgemäßen Verfahrens kann die integrierte Ausstellungseinheit lediglich für das Automatisierungsgerät, in dem es enthalten ist, Geräte-Zertifikate ausstellen. Dazu kann ein dafür benötigtes Schlüsselpaar direkt an das Automatisierungsgerät gebunden sein, z.B. über einen festen allgemeinen Namen (common name) des Gerätes in einem Root Zertifikat.

In einer bevorzugten Ausführungsform vergibt die Ausstellungseinheit für jedes Geräte-Zertifikat, das sie ausstellt, mindestens einen gleichen Parameter, insbesondere einen gleichen allgemeinen Namen (common name). Dies hat den Vorteil, dass die integrierte Ausstellungseinheit nur sehr begrenzt zur missbräuchlichen Ausstellung weiterer Geräte-Zertifikate durch einen Angreifer verwendet werden kann. Dies kann in einfacher Weise durch eine eingeschränkte Vergabe der Parameter im Zertifikat erreicht werden. Insbesondere ist die Vergabe des gleichen, allgemeinen Namens (common name) geeignet, da diese sofort mit einem spezifischen Automatisierungsgerät assoziiert wird.

In einer Ausführungsform des erfindungsgemäßen Verfahrens fordert das Automatisierungsgerät bei einer Änderung der Konfiguration des Automatisierungsgeräts ein Geräte-Zertifikat mit gerätespezifischen Konfigurationsdaten entsprechend der geänderten Konfiguration des Automatisierungsgeräts bei einer Ausstellungseinheit, die nicht im Automatisierungsgerät selbst enthalten ist, an. Dies hat den Vorteil, dass das Automatisierungsgerät einfach aufgebaut bleibt, und eine räumlich abgetrennte Ausstellungseinheit für eine Vielzahl von Automatisierungsgeräten Geräte-Zertifikate ausstellt.

Vorteilhaft ist es dabei, eine Anforderungsnachricht zur Anforderung eines Geräte-Zertifikats durch eine digitale Signatur mittels eines generischen, nicht konfigurations-spezifischen Geräte-Zertifikats und/oder durch eine digitale Signatur mittels eines vorherigen Geräte-Zertifikats, das der vor der Konfigurationsänderung des Automatisierungsgeräts verwendeten Konfiguration entspricht, geschützt wird. Alternativ oder auch zusätzlich kann die Anforderungsnachricht durch ein Gerätepasswort geschützt werden. Dies bewirkt eine gesicherte Kommunikation zwischen Automatisierungsgerät und Ausstellungstelle, bei der die Identität des Automatisierungsgeräts sowie die Konfigurationsdaten sichergestellt sind.

In einer vorteilhaften Ausführungsform wird nach einer Anforderung oder bei der Verwendung eines vordefinierten Geräte-Zertifikats mit geänderten gerätespezifischen Konfigurationsdaten das vor der Konfigurationsänderung verwendete Geräte-Zertifikat widerrufen. Somit ist das Automatisierungsgerät stets eindeutig durch ein einziges Geräte-Zertifikat gekennzeichnet.

In einer vorteilhaften Ausführungsform kann nach einer Anforderung oder bei der Verwendung eines vordefinierten Geräte-Zertifikats mit geänderten gerätespezifischen Konfigurationsdaten das vor der Konfigurationsänderung verwendete Geräte-Zertifikat, noch für eine vorgegebene Zeit zu einer positiven Authentisierung verwendet werden kann. Dies ermöglicht es insbesondere, das Automatisierungsgerät mit einer neuen Konfiguration auch zu betreiben, solange ein aktualisiertes Geräte-Zertifikat noch nicht erstellt wurde. Dies ist insbesondere dann vorteilhaft, wenn ein aktualisiertes Geräte-Zertifikat lediglich in bestimmten Betriebsmodi erzeugt werden kann.

In einer Ausführungsform weisen die mehreren vordefinierten Geräte-Zertifikate bzw. die bei Änderung der Konfiguration des Automatisierungsgeräts ausgestellten Geräte-Zertifikate einen jeweils unterschiedlichen Geräteschlüssel oder ein jeweils unterschiedliches Geräteschlüsselpaar auf. In einer weiteren Ausführungsform weisen die mehreren vordefinierten Geräte-Zertifikate bzw. die bei Änderung der Gerätekonfiguration ausgestellten Geräte-Zertifikate jeweils den gleichen Geräteschlüssel oder jeweils das gleiche Geräteschlüsselpaar auf. Jeweils unterschiedliche Geräteschlüssel bzw. Geräteschlüsselpaare erhöhen die Zuverlässigkeit des Zertifikats bzw. erfordern höheren Aufwand zur Manipulation des Zertifikats. Andererseits erfolgt die Ausstellung eines Geräte-Zertifikats mit gleichem Schlüssel bzw. gleichem Geräteschlüsselpaar eine weniger komplexe Ausstellungsstelle und geringere Ausstellungsdauer.

In einer vorteilhaften Ausführungsform des erfindungsgemäßen Verfahrens erstellt das Automatisierungsgerät eine Attestierungsinformation zur Bestätigung der geänderten gerätespezifischen Konfigurationsdaten und übermittelt dies an die Ausstellungseinheit. Die Attestierungsinformation bestätigt die Authentizität der Konfiguration und stellt einen höheren Sicherheitsgrad der übertragenen genetisch spezifischen Konfigurationsdaten dar und kann zu einer höheren Sicherheitseinstufung der Nachricht bzw. des Geräts verwendet werden.

In einer anderen Ausführungsform des erfindungsgemäßen Verfahrens wird ein regulärer Betriebsmodus des Automatisierungsgeräts nur dann aktiviert, wenn ein Geräte-Zertifikat entsprechend der geänderten Konfiguration des Automatisierungsgeräts dem Automatisierungsgerät vorliegt. Damit kann sichergestellt werden, dass das Automatisierungsgerät nur in der erwarteten Konfiguration betrieben wird. Eine ohne entsprechendes Geräte-Zertifikat betriebene Konfiguration des Automatisierungsgerätes ist nicht möglich.

Das erfindungsgemäße Automatisierungsgerät einer Automatisierungsanlage enthält mindestens ein Geräte-Zertifikat, wobei sich das Automatisierungsgerät mittels des Geräte-Zertifikats, das mit gerätespezifischen Konfigurationsdaten des Automatisierungsgeräts verbunden ist, gegenüber einem Authentisierungspartner authentisiert. Das Automatisierungsgerät ist dabei derart ausgebildet, dass das Automatisierungsgerät bei oder nach einer Änderung der Konfiguration selbsttätig ein Geräte-Zertifikat mit gerätespezifischen Konfigurationsdaten entsprechend der geänderten Konfiguration des Automatisierungsgeräts ermittelt und nachfolgend zum Authentisieren verwendet.

In einer Ausführungsform des erfindungsgemäßen Automatisierungsgeräts weist das Automatisierungsgerät mehrere vordefinierte Geräte-Zertifikate mit unterschiedlichen gerätespezifischen Konfigurationsdaten auf.

In einer Ausführungsform des erfindungsgemäßen Automatisierungsgeräts sind die Ausstellungseinheit und eine Steuereinheit zur Steuerung des Betriebs des Automatisierungsgeräts auf jeweils einer separaten Speichereinheit enthalten und die separaten Speichereinheiten sind durch eine Separationseinheit verbunden.

Das erfindungsgemäße System zum Aktualisieren eines digitalen Geräte-Zertifikats umfasst mindestens ein Automatisierungsgerät und mindestens eine Ausstellungseinheit, wobei das Automatisierungsgerät mindestens ein Geräte-Zertifikat aufweist und sich mittels des Geräte-Zertifikats, das gerätespezifische Konfigurationsdaten des Automatisierungsgeräts enthält, gegenüber einem Authentisierungspartner authentisiert. Das Automatisierungsgerät ist derart ausgebildet, dass bei einer Änderung der Konfiguration des Automatisierungsgeräts dieses selbsttätig ein Geräte-Zertifikat mit gerätespezifischen Konfigurationsdaten entsprechend der geänderten Konfiguration des Automatisierungsgeräts ermittelt und nachfolgend zum Authentisieren verwendet. Die mindestens eine Ausstellungseinheit ist eingerichtet, um ein Geräte-Zertifikat mit gerätespezifischen Konfigurationsdaten entsprechend der geänderten Konfiguration des Automatisierungsgeräts auszustellen.

Ausführungsbeispiele des erfindungsgemäßen Verfahrens sind in den Zeichnungen beispielhaft dargestellt und werden anhand der nachfolgenden Beschreibung näher erläutert.

Es zeigen:
- Fig. 1: ein erstes Ausführungsbeispiel des erfindungsgemäßen Verfahrens als Flussdiagramm;
- Fig. 2: ein zweites Ausführungsbeispiel des erfindungsgemäßen Verfahrens unter Einbeziehung einer Ausstellungseinheit als Flussdiagramm;
- Fig. 3: ein Ausführungsbeispiel eines erfindungsgemäßen Automatisierungsgeräts in schematischer Darstellung;
- Fig. 4: ein erfindungsgemäßes Ausführungsbeispiel eines Automatisierungsgeräts mit integrierter Ausstellungseinheit auf einer separaten Speichereinheit in schematischer Darstellung;
- Fig. 5: ein erstes erfindungsgemäßes Ausführungsbeispiel einer Anforderung eines Geräte-Zertifikats bei einem nicht im Automatisierungsgerät enthaltenen Ausstellungseinheit in schematischer Darstellung und
- Fig. 6: ein zweites erfindungsgemäßes Ausführungsbeispiel einer Anforderung eines Geräte-Zertifikats mit Attestierungsinformation in schematischer Darstellung.

Einander entsprechende Teile sind in allen Figuren mit den gleichen Bezugszeichen versehen.

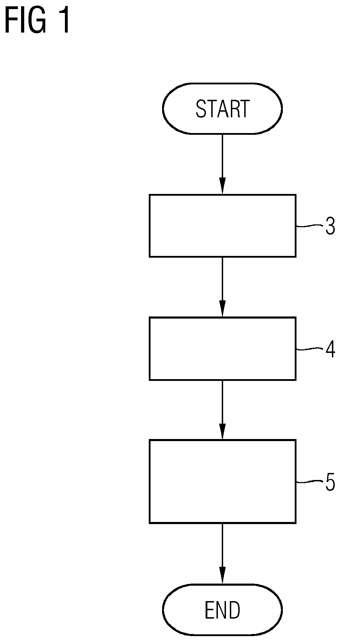

Fig. 1 zeigt einen allgemeinen Ablauf 1 einer Aktualisierung eines digitalen Geräte-Zertifikats in einem Automatisierungsgerät. Der Ablauf beginnt im Verfahrensschritt 3 mit einer Änderung der Konfiguration des Automatisierungsgeräts. Eine solche Konfigurationsänderung kann beispielsweise durch einen Firmware-Austausch, eine Merkmals-Freischaltung oder dem Aktivieren eines Ländercodes, durch die eine länderspezifische Betriebsart ausgewählt wird, erfolgen. Ebenfalls sind Konfigurationsänderungen einer nutzerdefinierbaren Konfiguration oder eine nutzerdefinierbaren Sicherheitskonfiguration möglich. Eine Konfigurationsänderung ist beispielsweise auch durch das Zurücksetzen in einen Ausgangszustand bedingt. Eine Konfigurationsänderung ist auch durch nichtnutzerdefinierbare Konfigurationen, die durch z. B. einen Hersteller oder einen Servicemitarbeiter veranlasst werden, möglich.

Stellt das Automatisierungsgerät eine solche Konfigurationsänderung fest, ermittelt das Automatisierungsgerät selbsttätig im Verfahrensschritt 4 ein aktualisiertes Geräte-Zertifikat, das die gerätespezifischen Konfigurationsdaten entsprechend der geänderten Konfiguration umfasst. In der nachfolgenden Kommunikation beispielsweise mit anderen Automatisierungsgeräten oder sonstigen Authentisierungspartnern, siehe Verfahrensschritt 5, werden Nachrichten geschützt durch das aktualisierte Geräte-Zertifikat übermittelt. Aktualisierte Geräte-Zertifikate können in Abhängigkeit von der aktuellen Konfiguration bestimmt und verwendet werden. Damit kann eine nahtlose Reihenfolge der verwendeten Gerätkonfigurationen anhand der Kette an Zertifikaten lückenlos bis zur Originalkonfiguration des Automatisierungsgeräts nachvollzogen werden und für eine weitere Auswertung bereitgestellt werden.

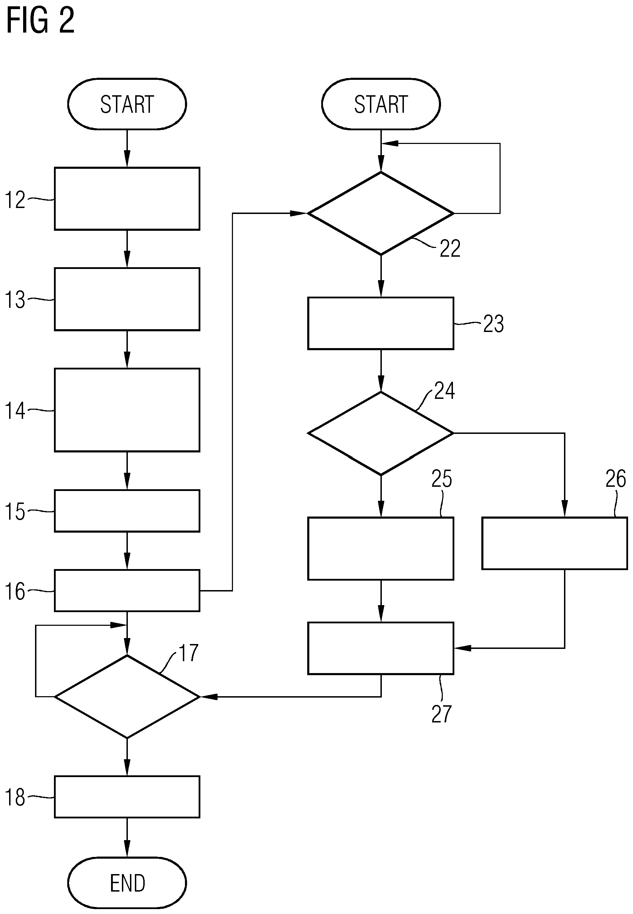

Fig. 2 zeigt den Ablauf 10 zur Ermittlung eines aktualisierten Geräte-Zertifikats unter Verwendung einer Ausstellungseinheit für Zertifikate, die beispielsweise als Zertifizierungsstelle in einer Sicherheitsinfrastruktur mit öffentlichen Schlüsseln (PKI-Sicherheitsinfrastruktur) arbeitet. Dabei wird ein aktualisiertes Geräte-Zertifikat durch die Erzeugung einer Anforderungsnachricht bei einer Ausstellungseinheit angefordert. Die Anforderungsnachricht ist dabei beispielsweise durch ein vorheriges Geräte-Zertifikat, das mit gerätespezifischen Konfigurationsdaten des Automatisierungsgeräts vor der Konfigurationsänderung verbunden ist, geschützt.

Die Ausstellungseinheit umfasst hier die Rolle einer Registrierungs- und Zertifizierungsstelle einer PKI-Sicherheitsinfrastruktur. Der Ablauf 10 gilt dabei sowohl für eine in das Automatisierungsgerät integrierte Ausstellungseinheit sowie einer räumlich abgesetzten Ausführungsform. Die Ausstellungseinheit umfasst die Funktion einer Registrierungsstelle, die eine Anfrage entgegennimmt und prüft, sowie die Funktion einer Zertifizierungsstelle, die ein digitales Geräte-Zertifikat ausstellt. Beide Funktionen können ebenso in getrennten Einheiten entweder integriert in das Automatisierungsgerät oder als separate Einheiten einer öffentlichen Schlüssel-Infrastruktur ausgebildet sein. Die Verfahrensschritte, die in der Ausstellungseinheit ausgeführt werden, sind auch der rechten Seite, die Verfahrensschritte, die im Automatisierungsgerät ausgeführt werden, sind auch der linken Seite in Fig. 2 dargestellt.

Im Verfahrensschritt 12 findet eine Änderung der Konfiguration des Automatisierungsgeräts statt. In Schritt 13 wird das vorherige Geräte-Zertifikat das gerätespezifische Konfigurationsdaten des Automatisierungsgeräts vor der Änderung enthält oder referenziert, ermittelt. Daraufhin erzeugt das Automatisierungsgerät eine Anforderungsnachricht mit der ein aktualisiertes Geräte-Zertifikat mit gerätespezifischen Konfigurationsdaten entsprechend der geänderten Konfiguration angefordert wird, siehe Verfahrensschritt 14. In Schritt 15 wird nun die Anforderungsnachricht durch das vorherige Geräte-Zertifikat geschützt und in Schritt 16 an die Ausstellungseinheit übermittelt.

Im Schritt 22 wird die Anforderungsnachricht in der Ausstellungseinheit entgegengenommen. Die Anforderungsnachricht wird in Schritt 23 durch das ihr bekannte vorherige Geräte-Zertifikat authentisiert. Die Anforderungsnachricht wird in Schritt 24 für das aktualisierte Geräte-Zertifikat verifiziert. Ist die Verifizierung erfolgreich, stellt die Ausstellungseinheit ein aktualisiertes Geräte-Zertifikat mithilfe eines Authentisierungs-Berechtigungsnachweises der Ausstellungseinheit aus. Das aktualisierte Geräte-Zertifikat wird in Schritt 27 an das Automatisierungsgerät übermittelt und dort in Schritt 18 gespeichert. Konnte die Anforderungsnachricht für das aktualisierte Geräte-Zertifikat nicht erfolgreich verifiziert werden, wird in Schritt 26 eine Fehlerkennung ausgegeben und an das Automatisierungsgerät übermittelt. Damit ist der Aktualisierungsablauf abgeschlossen.

In einem Ausführungsbeispiel wird bei der Anforderung bzw. Verwendung eines aktualisierten Geräte-Zertifikats das vorherige Geräte-Zertifikat widerrufen. Als weitere Option kann das vorherige Geräte-Zertifikat entsprechend der unveränderten Konfiguration auch nach Ausstellung eines aktualisierten Geräte-Zertifikats noch für eine vorgegebene Zeit gültig bleiben und zu einer positiven Authentisierung führen. Das vorherige Geräte-Zertifikat kann dabei beispielsweise für eine Teilmenge der Authentisierungspartner oder auch für eine Teilmenge von Verwendungszwecken gültig bleiben.

Die mehreren vorherigen bzw. aktualisierten Geräte-Zertifikate können jeweils den gleichen Geräteschlüssel oder jeweils das gleiche Geräteschlüsselpaar aufweisen. Es ist aber ebenfalls möglich, dass die mehreren vorherigen bzw. aktualisierten Geräte-Zertifikate jeweils unterschiedliche Geräteschlüssel bzw. unterschiedliche Geräteschlüsselpaare aufweisen.

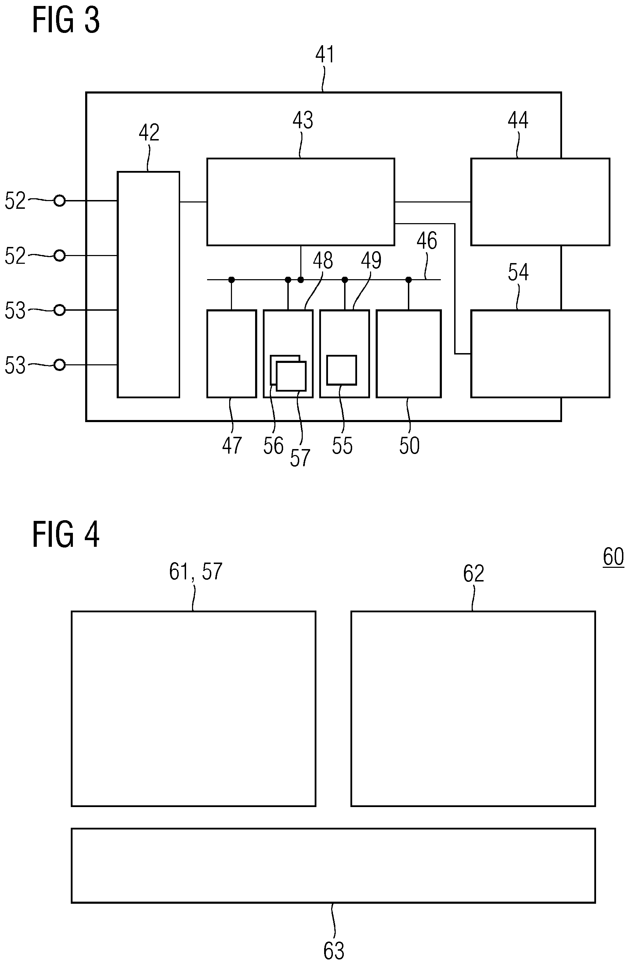

Fig. 3 zeigt nun ein Ausführungsbeispiel eines Automatisierungsgeräts 41. Dieses umfasst beispielsweise eine Recheneinheit 43 und eine Ein-/Ausgabe-Einheit 42, mit denen beispielsweise Sensoren 52 und Aktoren 53 verbunden sind. Die Recheneinheit 43 greift über einen Datenbus 46 auf einen Arbeitsspeicher 47, einen nur Lese-Speicher 48, einen Programmspeicher 49 und einen Konfigurationsspeicher 50 zu. Über eine Netzwerksschnittstelle 44 kann das Automatisierungsgerät mit einem Datennetzwerk, das beispielsweise auf dem Internet Protokoll basiert, verbunden werden. Des Weiteren ist eine beispielsweise serielle Schnittstelle 54 vorhanden.

Konfigurationseinstellungen des Gerätes sind beispielsweise im Konfigurationsspeicher 50 abgelegt. Im Programmspeicher 49 ist Programmcode abgelegt. Konfigurationseinstellungen können lokal über die lokale Schnittstelle 54 oder über eine Netzwerkverbindung über die Netzwerkschnittstelle 44 geändert werden.

Das Automatisierungsgerät 41 enthält ein konfigurationsabhängiges Geräte-Zertifikat 55 mit gerätespezifischen Konfigurationsdaten. Dieses verwendet das Automatisierungsgerät 41 beispielsweise um sich gegenüber einem Authentisierungsserver über eine Netzwerkverbindung zu authentisieren oder um Messwerte an einen Aufzeichnungsserver oder andere Automatisierungsgeräte der Automatisierungsanlage zu übertragen.

In einem Ausführungsbeispiel sind auf dem Automatisierungsgerät 41 mehrere vordefinierte konfigurationsspezifische Geräte-Zertifikate 55 vorhanden und beispielsweise im Programmspeicher 49 hinterlegt. Abhängig von der aktuellen Gerätekonfiguration, die beispielsweise im Konfigurationsspeicher 50 hinterlegt ist, wird das der Konfiguration entsprechende Geräte-Zertifikat 55 ausgewählt und für die Kommunikation mit anderen Automatisierungsgeräten oder Authentisierungspartnern verwendet.

Dieses Ausführungsbeispiel hat den Vorteil, dass mehrere Produktvarianten des Automatisierungsgeräts, die sich beispielsweise nur in ihrer Software unterscheiden, identisch gefertigt werden können. Bei der Herstellung werden durch den Hersteller bereits vordefinierte Geräte-Zertifikate 55 für alle möglichen Produktvarianten erstellt und auf dem Gerät bereitgestellt. So kann z. B. erst bei Auslieferung oder Installation des Automatisierungsgeräts eine Konfiguration des Gerätes festgelegt werden, ohne ein entsprechendes Geräte-Zertifikat erst erzeugen und installieren zu müssen. Dies ist besonders vorteilhaft, da somit die Auswahl der Gerätekonfiguration nicht in einer speziell geschützten Umgebung erfolgen muss.

In einem anderen Ausführungsbeispiel umfasst das Automatisierungsgerät 41 beispielsweise eine Ladeeinheit, die im nur-Lese-Speicher 48 enthalten ist. Die Ladeeinheit 56 kann den Programmspeicher 49 teilweise oder vollständig überschreiben. Dazu muss beim Gerätestart in einen speziellen Programmspeicher-Änderungsmodus gebootet werden. Die Ladeeinheit 56 kann nun, abhängig von der installierten Programmkonfiguration, ein Geräte-Zertifikat 55 ausstellen, das Information der Programmkonfiguration, wie z. B. Versionsstand, enthält. Dieses Geräte-Zertifikat 55 mit gerätespezifischen Konfigurationsdaten wird beispielsweise in den Programmspeicher 49, siehe Fig. 3, oder in den Konfigurationsspeicher 50 geschrieben.

Die Ladeeinheit 56 hat Zugriff auf einen privaten Schlüssel einer Ausstellungseinheit 57, die beispielsweise ebenfalls im nur-Lese-Speicher 48 enthalten ist. Dieser wird verwendet, um eine Signatur des Geräte-Zertifikats zu erstellen.

Die Ladeeinheit 56 prüft beispielsweise die einzuspielende Programmkonfiguration, bevor diese eingespielt bzw. aktiviert wird. Diese Überprüfung wird z. B. durch Verifikation einer kryptographischen Prüfsumme, z.B. SHA-1, SHA-256, oder auch HMAC-SHA1 oder HMAC-SHA256, oder einer digitalen Signatur, z.B. RSA oder DSA oder ECDSA, des Konfigurationsprogrammes überprüft.

Die Schlüssel der Ausstellungseinheit 57 können direkt an die Identität des Automatisierungsgeräts 41 gebunden sein. Dazu kann der allgemeine Name (common name) des Geräte-Zertifikats 55 der Ausstellungseinheit 56 spezifische Information des Automatisierungsgeräts 41, z. B. dessen Seriennummer, enthalten. Ein Aussteller des Zertifikats der Ausstellungseinheit 57 kann beispielsweise der Hersteller des Automatisierungsgeräts 41 sein. Es ist ebenfalls möglich, das Zertifikat der Ausstellungseinheit 57 durch ein spezielles Zertifikat eines Betreibers auszutauschen.

Dieses Ausführungsbeispiel hat den Vorteil, dass nur die Ladeeinheit 56 Zugriff auf den privaten Schlüssel der Ausstellungseinheit 57 benötigt. Vorteilhaft ist ebenfalls, dass das Konfigurationsprogramm nicht spezifisch für ein einzelnes Automatisierungsgerät 41 erzeugt und bereitgestellt werden muss, da ein allgemeines Konfigurationsprogramm identisch für mehrere Automatisierungsgeräte 41 verwendet werden kann. Jedes Automatisierungsgerät 41 bestimmt dann selbst das entsprechende für das Automatisierungsgerät spezifische und für die installierte Konfigurationsprogrammversion entsprechende Geräte-Zertifikat 55.

Bei einer anderen Ausführungsform, in Figur 4 dargestellt, weist das Automatisierungsgerät 41 einen Speicher 60 mit Speichereinheiten 61, 62, sowie eine Separationseinheit 63 auf. In der Speichereinheit 61 sind die Funktionen bzw. Programmeinheiten für den regulären Betrieb des Automatisierungsgeräts 41 enthalten, die Ausstellungseinheit 57 zur Ausstellung eines Geräte-Zertifikats 55 mit gerätespezifischen Konfigurationsdaten ist in Speichereinheit 62 enthalten. Weitere Speichereinheiten können vorhanden sein, um beispielsweise Echtzeit oder nicht-Echtzeit Funktionen voneinander zu trennen. Auch hier sollte der Schlüssel der Ausstellungseinheit 57 direkt mit der Identität des Automatisierungsgeräts 41 gebunden sein. Dazu kann der allgemeine Name des Zertifikats der Ausstellungseinheit 57 spezifische Informationen des Automatisierungsgeräts 41, z. B. dessen Seriennummer, enthalten. Der Aussteller des Zertifikats der Ausstellungseinheit kann beispielsweise der Gerätehersteller oder ein Betreiber des Automatisierungsgeräts 41 bzw. der Automatisierungsanlage sein.

Diese Ausführungsform hat den Vorteil, dass die Separationseinheit 63 voneinander getrennte, logische Softwarepartitionen in Form der separaten Speichereinheiten 61, 62 bereitstellt. Dies stellt sicher, dass die Speichereinheit 62 mit Funktionen zur Steuerung des Betriebs des Automatisierungsgeräts 41 nicht auf einen privaten Schlüssel der Ausstellungseinheit 57, die in der Speichereinheit 61 enthalten ist, zugreifen kann.

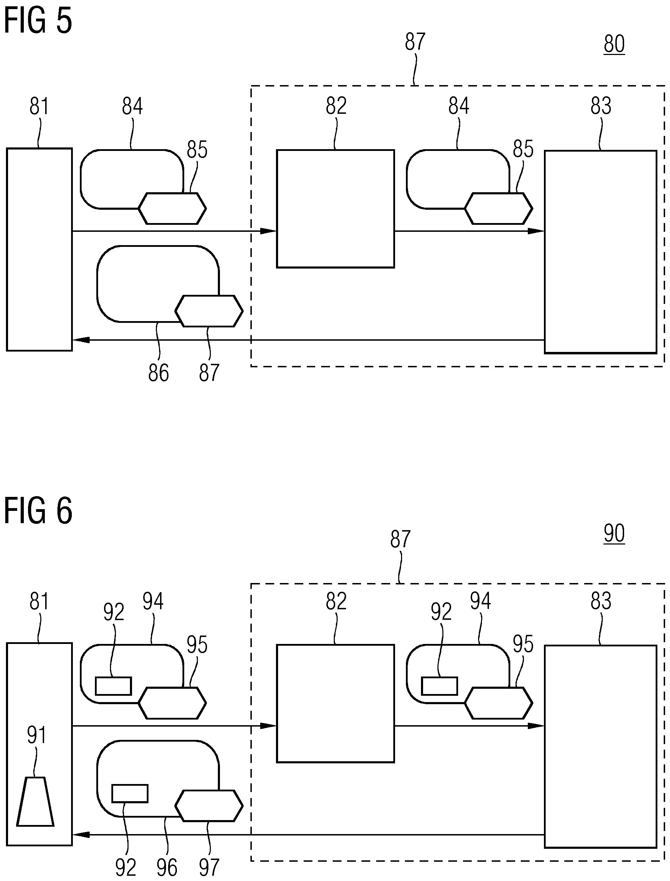

Fig. 5 zeigt eine weitere Ausführungsform 80 des Verfahrens, in der die Ausstellungseinheit 87 als eine eigenständige Registrierungseinheit 82 und eine separate Zertifizierungseinheit 83 ausgebildet und nicht im Automatisierungsgerät 81 integriert ist. Wird im Automatisierungsgerät 81 eine Konfigurationsänderung festgestellt, fordert das Automatisierungsgerät 81 mittels einer Anforderungsnachricht 84 ein aktualisiertes Geräte-Zertifikat bei der Ausstellungseinheit 87 an. In der Anforderungsnachricht 84 sind der Name des Automatisierungsgeräts, die aktuellen, d. h. geänderten, gerätespezifischen Konfigurationsdaten sowie ein öffentlicher Schlüssel enthalten. Die Anforderungsnachricht 84 kann beispielsweise mit einer Prüfsumme 85 gesichert sein. Die Registrierungseinheit 82 empfängt die Anforderungsnachricht, überprüft diese und leitet diese an die Zertifizierungsstelle 83 weiter. Nach dem Empfang der Anforderungsnachricht 84 stellt die Zertifizierungsstelle 83 ein entsprechendes Geräte-Zertifikat 86 aus und sendet dieses an das Automatisierungsgerät 81 zurück. Das Zertifikat 86 wird dabei durch eine Signatur 87 der Zertifizierungsstelle 83 gesichert.

In dieser Ausführungsform kann das vorherige Geräte-Zertifikat entsprechend den unveränderten Gerätekonfigurationen automatisch widerrufen werden. Dazu stellt das Automatisierungsgerät 81 eine Widerrufungsanforderung aus und sendet diese Anforderung an die Zertifizierungsstelle 83. In einer Ausführungsform widerruft die Zertifizierungsstelle 83 bzw. die Ausstellungseinheit 87, die sowohl die Registrierungsals auch Zertifizierungsstelle umfasst, automatisch das vorhergehende Geräte-Zertifikat.

Figur 6 zeigt eine weitere Ausführungsform 90 des Verfahrens zur Aktualisierung eines digitalen Geräte-Zertifikats mit gerätespezifischen Konfigurationsdaten, in dem das Automatisierungsgerät 81 ein vertrauenswürdiges Sicherheitsmodul 91 enthält. Dieses Sicherheitsmodul prüft die geänderte Programmkonfiguration und erstellt eine Attestierungsinformation 92, die als weiterer Echtheitsnachweis in die Anforderungsnachricht 84 eingefügt wird. Die Anforderungsnachricht 94 wird wiederum durch z.B. eine digitale Signatur 95 mittels eines generischen, nicht konfigurations-spezifischen Geräte-Zertifikats oder durch eine digitale Signatur 95 mittels eines vorherigen Geräte-Zertifikats oder durch ein Gerätepasswort, geschützt. Die Attestierungsinformation 92 stellt ein weiteres, zusätzliches Sicherheitsmerkmal dar, sodass ein höherrangiges Sicherheitslevel dem Automatisierungsgerät 81 bescheinigt wird.

Die Ausstellungseinheit 87 bzw. die Zertifizierungsstelle 83 kann die Attestierungsinformation 92 lediglich überprüfen und ein aktualisiertes Geräte-Zertifikat 96 ohne Eintragung der Attestierungsinformation 92 an das Automatisierungsgerät 81 zurücksenden. Alternativ kann die Attestierungsinformation 92 in das Zertifikat 96 eintragen werden. Zur Übermittlung des Zertifikats 96 wird eine digitale Signatur 97 mittels eines generischen, nicht konfigurations-spezifischen Geräte-Zertifikats und/oder durch eine digitale Signatur mittels eines vorherigen Geräte-Zertifikats und/oder durch ein Gerätepaar geschützt.

Alle beschriebenen und/oder gezeichneten Merkmale können im Rahmen der Erfindung vorteilhaft miteinander kombiniert werden. Die Ausführung ist nicht auf die beschriebenen Ausführungsbeispiele beschränkt.

## Patentansprüche

1. Verfahren zum Aktualisieren eines digitalen Geräte-Zertifikats (55, 86, 96) eines Automatisierungsgeräts (41, 81) einer Automatisierungsanlage, bei dem sich das Automatisierungsgerät (41, 81) mittels mindestens eines Geräte-Zertifikats (55, 86, 96) gegenüber einem Authentisierungspartner authentisiert und das Geräte-Zertifikat (55, 86, 96) mit gerätespezifische Konfigurationsdaten des Automatisierungsgerät (41, 81) verbunden ist, wobei bei oder nach einer Änderung der Konfiguration des Automatisierungsgeräts (41, 81) das Automatisierungsgerät (41, 81) selbsttätig ein Geräte-Zertifikat (55, 86, 96) ermittelt, das gerätespezifischen Konfigurationsdaten entsprechend der geänderten Konfiguration des Automatisierungsgeräts (41, 81) umfasst und nachfolgend zum Authentisieren verwendet,
wobei das Automatisierungsgerät (41, 81)
a) mehrere vordefinierte Geräte-Zertifikate mit unterschiedlichen gerätespezifischen Konfigurationsdaten aufweist und das Geräte-Zertifikat (55, 86, 96) mit gerätespezifischen Konfigurationsdaten entsprechend der geänderten Konfiguration des Automatisierungsgeräts (41, 81) ausgewählt wird
oder
b) eine integrierte Ausstellungseinheit (57, 87) aufweist und die Ausstellungseinheit (57, 87) ein Geräte-Zertifikat (55, 86, 96) ermittelt, das gerätespezifischen Konfigurationsdaten entsprechend der geänderten Konfiguration des Automatisierungsgeräts (41, 81) ausstellt
oder
c) bei einer Änderung der Konfiguration ein Geräte-Zertifikat (55, 86, 96) mit gerätespezifischen Konfigurationsdaten entsprechend der geänderten Konfiguration bei einer Ausstellungseinheit (57, 87), die nicht im Automatisierungsgerät (41, 81) selbst enthalten ist, anfordert.

2. Verfahren nach Anspruch 1, wobei das Geräte-Zertifikat (55, 86, 96) in einem beliebigen Betriebsmodus ausgestellt werden kann.

3. Verfahren nach Anspruch 1, wobei das Geräte-Zertifikat (55, 86, 96) lediglich an einen bestimmten Betriebsmodus gekoppelt ausgestellt werden kann.

4. Verfahren nach einem der vorhergehenden Ansprüche, wobei die Ausstellungseinheit (57, 87) lediglich für das Automatisierungsgerät (41, 81) in dem es enthalten ist Geräte-Zertifikate (55, 86, 96), ausstellen kann.

5. Verfahren nach Anspruch 4, wobei die Ausstellungseinheit (57, 87) für jedes Geräte-Zertifikat (55, 86, 96), das sie ausstellt mindestens einen gleichen Parameter, insbesondere einen gleichen allgemeinen Namen, vergibt.

6. Verfahren nach Anspruch 1, wobei eine Anforderungsnachricht (84, 94) zur Anforderung eines Geräte-Zertifikats (55, 86, 96) mit gerätespezifischen Konfigurationsdaten entsprechend der geänderten Konfiguration des Automatisierungsgeräts (41, 81) durch eine digitale Signatur (85, 95) mittels eines generischen, nicht konfigurations-spezifischen Geräte-Zertifikats geschützt wird und/oder durch eine digitale Signatur (85, 95) mittels eines vorherigen Geräte-Zertifikats entsprechend der vor der Konfigurationsänderung des Automatisierungsgeräts (41, 81) verwendeten Konfiguration geschützt wird und/oder durch ein Gerätepasswort geschützt wird.

7. Verfahren nach einem der Ansprüche 1 bis 6, wobei nach der Ermittlung eines Geräte-Zertifikats (55, 86, 96) mit geänderten gerätespezifischen Konfigurationsdaten das vor der Konfigurationsänderung des Automatisierungsgeräts verwendete Geräte-Zertifikat widerrufen wird.

8. Verfahren nach einem der Ansprüche 1 bis 7, wobei nach der Ermittlung eines Geräte-Zertifikats (55, 86, 96) mit geänderten gerätespezifischen Konfigurationsdaten das vor der Konfigurationsänderung des Automatisierungsgeräts (41, 81) verwendetes Geräte-Zertifikat (55, 86, 96) noch für eine vorgegebene Zeit zumindest für eine Teilmenge der Authentisierungspartner oder für zumindest eine Teilmenge von Verwendungszwecken zu einer positiven Authentisierung verwendet werden kann.

9. Verfahren nach einem der Ansprüche 1 bis 6, wobei die mehreren Geräte-Zertifikate (55, 86, 96) bzw. die bei Änderung der Konfiguration des Automatisierungsgeräts ausgestellten Geräte-Zertifikate (55, 86, 96) einen jeweils unterschiedlichen Geräteschlüssel oder ein jeweils unterschiedliches Geräteschlüsselpaar aufweisen.

10. Verfahren nach einem der Ansprüche 1 bis 6, wobei die mehreren Geräte-Zertifikate (55, 86, 96) bzw. die bei Änderung der Gerätekonfiguration ausgestellten Geräte-Zertifikate (55, 86, 96) jeweils den gleichen Geräteschlüssel oder jeweils das gleiche Geräteschlüsselpaar aufweisen.

11. Verfahren nach einem der Ansprüche 1 bis 6, wobei das Automatisierungsgerät (41, 81) eine Attestierungsinformation (92) zur Bestätigung der geänderten gerätespezifischen Konfigurationsdaten erstellt und an die Ausstellungseinheit (87) übermittelt.

12. Verfahren nach einem der Ansprüche 1 bis 10, wobei ein regulärer Betriebsmodus des Automatisierungsgeräts (41, 81) nur dann aktiviert wird, wenn ein Geräte-Zertifikat (55, 86, 96) entsprechend der geänderten Konfiguration des Automatisierungsgeräts (41, 81) dem Automatisierungsgerät (41, 81) vorliegt.

13. Verfahren nach einem der Ansprüche 1 bis 11, wobei das Geräte-Zertifikat (55, 86, 96) entsprechend einer unveränderten Konfiguration nach einer Änderung der Konfiguration des Automatisierungsgeräts (41, 81) noch für eine vorgegebene Zeit zu einer positiven Authentisierung verwendet werden kann.

14. Automatisierungsgerät einer Automatisierungsanlage mit mindestens einem Geräte-Zertifikat (55, 86, 96), wobei sich das Automatisierungsgerät (41, 81) mittels des Geräte-Zertifikats (55, 86, 96), das mit gerätespezifische Konfigurationsdaten des Automatisierungsgerät (41, 81) verbunden ist, gegenüber einem Authentisierungspartner authentisiert, wobei das Automatisierungsgerät (41, 81) derart ausgebildet ist, dass das Automatisierungsgerät (41, 81) bei oder nach einer Änderung der Konfiguration des Automatisierungsgeräts (41, 81) selbsttätig ein Geräte-Zertifikat(55, 86, 96) ermittelt, das gerätespezifischen Konfigurationsdaten entsprechend der geänderten Konfiguration des Automatisierungsgeräts (41, 81) umfasst, und nachfolgend zum Authentisieren verwendet , wobei das Automatisierungsgerät (41, 81)
a) mehrere vordefinierte Geräte-Zertifikate mit unterschiedlichen gerätespezifischen Konfigurationsdaten aufweist
oder
b) eine integrierte Ausstellungseinheit (57, 87) aufweist, oder
c) bei einer Änderung der Konfiguration ein Geräte-Zertifikat (55, 86, 96) mit gerätespezifischen Konfigurationsdaten entsprechend der geänderten Konfiguration bei einer Ausstellungseinheit (57, 87), die nicht im Automatisierungsgerät (41, 81) selbst enthalten ist, anfordert.

15. Automatisierungsgerät nach Anspruch 14, wobei die Ausstellungseinheit (57) und eine Steuereinheit, zur Steuerung des Betriebs des Automatisierungsgeräts (41, 81), auf jeweils einer separaten Speichereinheit (61, 62) enthalten sind, wobei die separaten Speichereinheiten (61, 62) durch eine Separationseinheit (63) verbunden sind.

16. System zum Aktualisieren eines digitalen Geräte-Zertifikats (55, 86, 96) eines Automatisierungsgerät (41, 81) einer Automatisierungsanlage mit mindestens einem Automatisierungsgerät (41, 81) und mindestens einer Ausstellungseinheit (57, 87), wobei das Automatisierungsgerät (41, 81) mindestens ein Geräte-Zertifikat (55, 86, 96) aufweist und sich mittels des Geräte-Zertifikats (55, 86, 96), das mit gerätespezifische Konfigurationsdaten des Automatisierungsgeräts (41, 81) verbunden ist, gegenüber einem Authentisierungspartner authentisiert, wobei das Automatisierungsgerät (41, 81) derart ausgebildet ist, dass das Automatisierungsgerät (41, 81) bei einer Änderung der Konfiguration des Automatisierungsgeräts (41, 81) selbsttätig ein Geräte-Zertifikat (55, 86, 96) ermittelt, das gerätespezifischen Konfigurationsdaten entsprechend der geänderten Konfiguration des Automatisierungsgeräts (41, 81) umfasst und nachfolgend zum Authentisieren verwendet und die mindestens eine Ausstellungseinheit (57, 87) derart ausgebildet ist um ein Geräte-Zertifikat (55, 86, 96) mit gerätespezifischen Konfigurationsdaten entsprechend der geänderten Konfiguration des Automatisierungsgeräts (41, 81) auszustellen,
wobei das Automatisierungsgerät (41, 81)
a) mehrere vordefinierte Geräte-Zertifikate mit unterschiedlichen gerätespezifischen Konfigurationsdaten aufweist,
oder
b) eine Ausstellungseinheit, die als eine integrierte Ausstellungseinheit (57, 87) ausgebildet ist, aufweist oder
c) bei einer Änderung der Konfiguration ein Geräte-Zertifikat (55, 86, 96) mit gerätespezifischen Konfigurationsdaten entsprechend der geänderten Konfiguration bei eine Ausstellungseinheit (57, 87), die nicht im Automatisierungsgerät (41, 81) selbst enthalten ist, anfordert.

## Claims

1. Method for updating a digital device certificate (55, 86, 96) of an automation device (41, 81) in an automation system, in which the automation device (41, 81) is authenticated with respect to an authentication partner using at least one device certificate (55, 86, 96) and the device certificate (55, 86, 96) is associated with device-specific configuration data relating to the automation device (41, 81), in which case, in the event of or after a change in the configuration of the automation device (41, 81), the automation device (41, 81) automatically determines a device certificate (55, 86, 96) which comprises device-specific configuration data corresponding to the changed configuration of the automation device (41, 81) and then uses it for authentication, the automation device (41, 81)
a) having a plurality of predefined device certificates having different device-specific configuration data, and the device certificate (55, 86, 96) having device-specific configuration data corresponding to the changed configuration of the automation device (41, 81) being selected
or
b) having an integrated issuing unit (57, 87), and the issuing unit (57, 87) determining a device certificate (55, 86, 96) which issues device-specific configuration data corresponding to the changed configuration of the automation device (41, 81)
or,
c) in the event of a change in the configuration, requesting a device certificate (55, 86, 96) having device-specific configuration data corresponding to the changed configuration from an issuing unit (57, 87) which is not included in the automation device (41, 81) itself.

2. Method according to Claim 1, the device certificate (55, 86, 96) being able to be issued in any desired operating mode.

3. Method according to Claim 1, the device certificate (55, 86, 96) only being able to be issued in a manner coupled to a particular operating mode.

4. Method according to one of the preceding claims, the issuing unit (57, 87) only being able to issue device certificates (55, 86, 96) for the automation device (41, 81) in which it is included.

5. Method according to Claim 4, the issuing unit (57, 87) allocating at least one identical parameter, in particular an identical common name, for each device certificate (55, 86, 96) issued by it.

6. Method according to Claim 1, a request message (84, 94) for requesting a device certificate (55, 86, 96) having device-specific configuration data corresponding to the changed configuration of the automation device (41, 81) being protected by a digital signature (85, 95) by means of a generic, non-configuration-specific device certificate and/or being protected by a digital signature (85, 95) by means of a previous device certificate corresponding to the configuration used before the change in the configuration of the automation device (41, 81) and/or being protected by a device password.

7. Method according to one of Claims 1 to 6, the device certificate used before the change in the configuration of the automation device being revoked after a device certificate (55, 86, 96) having changed device-specific configuration data has been determined.

8. Method according to one of Claims 1 to 7, the device certificate (55, 86, 96) used before the change in the configuration of the automation device (41, 81) still being able to be used for a predefined time at least for a subset of the authentication partners or for at least one subset of intended purposes for positive authentication after a device certificate (55, 86, 96) having changed device-specific configuration data has been determined.

9. Method according to one of Claims 1 to 6, the plurality of device certificates (55, 86, 96) or the device certificates (55, 86, 96) issued in the event of a change in the configuration of the automation device having a different device key or a different device key pair in each case.

10. Method according to one of Claims 1 to 6, the plurality of device certificates (55, 86, 96) or the device certificates (55, 86, 96) issued in the event of a change in the device configuration each having the same device key or the same device key pair.

11. Method according to one of Claims 1 to 6, the automation device (41, 81) creating an item of attestation information (92) for confirming the changed device-specific configuration data and transmitting it to the issuing unit (87).

12. Method according to one of Claims 1 to 10, a regular operating mode of the automation device (41, 81) being activated only when a device certificate (55, 86, 96) corresponding to the changed configuration of the automation device (41, 81) is available to the automation device (41, 81).

13. Method according to one of Claims 1 to 11, the device certificate (55, 86, 96) corresponding to an unchanged configuration being able to still be used for a predefined time for positive authentication after a change in the configuration of the automation device (41, 81).

14. Automation device in an automation system having at least one device certificate (55, 86, 96), the automation device (41, 81) being authenticated with respect to an authentication partner using the device certificate (55, 86, 96) associated with device-specific configuration data relating to the automation device (41, 81), the automation device (41, 81) being designed in such a manner that the automation device (41, 81), in the event of or after a change in the configuration of the automation device (41, 81), automatically determines a device certificate (55, 86, 96) which comprises device-specific configuration data corresponding to the changed configuration of the automation device (41, 81) and then uses it for authentication, the automation device (41, 81)
a) having a plurality of predefined device certificates having different device-specific configuration data
or
b) having an integrated issuing unit (59, 87), or,
c) in the event of a change in the configuration requesting a device certificate (55, 86, 96) having device-specific configuration data corresponding to the changed configuration from an issuing unit (57, 87) which is not included in the automation device (41, 81) itself.

15. Automation device according to Claim 14, the issuing unit (57) and a control unit, for controlling the operation of the automation device (41, 81), being included on a separate memory unit (61, 62) in each case, the separate memory units (61, 62) being connected by means of a separation unit (63).

16. System for updating a digital device certificate (55, 86, 96) of an automation device (41, 81) in an automation system having at least one automation device (41, 81) and at least one issuing unit (57, 87), the automation device (41, 81) having at least one device certificate (55, 86, 96) and being authenticated with respect to an authentication partner using the device certificate (55, 86, 96) which is associated with device-specific configuration data relating to the automation device (41, 81), the automation device (41, 81) being designed in such a manner that the automation device (41, 81), in the event of a change in the configuration of the automation device (41, 81), automatically determines a device certificate (55, 86, 96) which comprises device-specific configuration data corresponding to the changed configuration of the automation device (41, 81) and then uses it for authentication, and the at least one issuing unit (57, 87) being designed to issue a device certificate (55, 86, 96) which comprises device-specific configuration data corresponding to the changed configuration of the automation device (41, 81), the automation device (41, 81)
a) having a plurality of predefined device certificates having different device-specific configuration data,
or
b) having an issuing unit which is designed as an integrated issuing unit (57, 87), or,
c) in the event of a change in the configuration, requesting a device certificate (55, 86, 96) having device-specific configuration data corresponding to the changed configuration from an issuing unit (57, 87) which is not included in the automation device (41, 81) itself.

## Revendications

1. Procédé d'actualisation d'un certificat d'appareil numérique (55, 86, 96) d'un appareil d'automatisation (41, 81) d'une installation d'automatisation, dans lequel l'appareil d'automatisation (41, 81) est authentifié au moyen d'au moins un certificat d'appareil (55, 86, 96) vis-à-vis d'un partenaire d'authentification et le certificat d'appareil (55, 86, 96) est relié à des données de configuration de l'appareil d'automatisation (41, 81) spécifiques à l'appareil, l'appareil d'automatisation (41, 81) déterminant automatiquement, lors d'une ou après une modification de la configuration de l'appareil d'automatisation (41, 81), un certificat d'appareil (55, 86, 96) qui inclut des données de configuration spécifiques à l'appareil conformément à la configuration modifiée de l'appareil d'automatisation (41, 81) et les utilise ensuite aux fins de l'authentification, l'appareil d'automatisation (41, 81)
a) comportant plusieurs certificats d'appareil prédéfinis avec différentes données de configuration spécifiques à l'appareil et le certificat d'appareil (55, 86, 96) avec des données de configuration spécifiques à l'appareil étant sélectionné conformément à la configuration modifiée de l'appareil d'automatisation (41, 81)
ou
b) comportant une unité de délivrance intégrée (57, 87) et l'unité de délivrance (57, 87) déterminant un certificat d'appareil (55, 86, 96) qui délivre des données de configuration spécifiques à l'appareil conformément à la configuration modifiée de l'appareil d'automatisation (41, 81)
ou
c) demandant, en cas de modification de la configuration, un certificat d'appareil (55, 86, 96) avec des données de configuration spécifiques à l'appareil conformément à la configuration modifiée à une unité de délivrance (57, 87) qui n'est pas contenue dans l'appareil d'automatisation (41, 81) lui-même.

2. Procédé selon la revendication 1, le certificat d'appareil (55, 86, 96) pouvant être délivré dans n'importe quel mode opérationnel.

3. Procédé selon la revendication 1, le certificat d'appareil (55, 86, 96) ne pouvant être délivré que de manière couplée à un mode opérationnel déterminé.

4. Procédé selon l'une des revendications précédentes, l'unité de délivrance (57, 87) ne pouvant délivrer des certificats d'appareil (55, 86, 96) que pour l'appareil d'automatisation (41, 81) dans lequel elle est contenue.

5. Procédé selon la revendication 4, l'unité de délivrance (57, 87) attribuant, pour chaque certificat d'appareil (55, 86, 96) qu'elle délivre, au moins un même paramètre, et plus particulièrement un même nom général.

6. Procédé selon la revendication 1, un message de requête (84, 94) pour demander un certificat d'appareil (55, 86, 96) avec des données de configuration spécifiques à l'appareil conformément à la configuration modifiée de l'appareil d'automatisation (41, 81) étant protégé par une signature numérique (85, 95) au moyen d'un certificat d'appareil générique non spécifique à la configuration et/ou par une signature numérique (85, 95) au moyen d'un certificat d'appareil précédent conformément à la configuration utilisée avant la modification de configuration de l'appareil d'automatisation (41, 81) et/ou par un mot de passe d'appareil.

7. Procédé selon l'une des revendications 1 à 6, le certificat d'appareil utilisé avant la modification de configuration de l'appareil d'automatisation étant révoqué après la détermination d'un certificat d'appareil (55, 86, 96) avec des données de configuration spécifiques à l'appareil modifiées.

8. Procédé selon l'une des revendications 1 à 7, le certificat d'appareil (55, 86, 96) utilisé avant la modification de configuration de l'appareil d'automatisation (41, 81) pouvant encore, après la détermination d'un certificat d'appareil (55, 86, 96) avec des données de configuration spécifiques à l'appareil modifiées, être utilisé pendant un temps prédéterminé au moins pour un sous-ensemble des partenaires d'authentification ou pour au moins un sous-ensemble de finalités d'utilisation aux fins d'une authentification positive.

9. Procédé selon l'une des revendications 1 à 6, les plusieurs certificats d'appareil (55, 86, 96) resp. les certificats d'appareil (55, 86, 96) délivrés lors d'une modification de la configuration de l'appareil d'automatisation présentant une clé d'appareil respectivement différente ou une paire de clés d'appareil respectivement différente.

10. Procédé selon l'une des revendications 1 à 6, les plusieurs certificats d'appareil (55, 86, 96) resp. les certificats d'appareil (55, 86, 96) délivrés lors d'une modification de la configuration d'appareil présentant respectivement la même clé d'appareil ou respectivement la même paire de clés d'appareil.

11. Procédé selon l'une des revendications 1 à 6, l'appareil d'automatisation (41, 81) établissant une information d'attestation (92) pour confirmer les données de configuration spécifiques à l'appareil modifiées et les transmette à l'unité de délivrance (87).

12. Procédé selon l'une des revendications 1 à 10, un mode opérationnel ordinaire de l'appareil d'automatisation (41, 81) n'étant activé qu'en présence, pour l'appareil d'automatisation (41, 81), d'un certificat d'appareil (55, 86, 96) conformément à la configuration modifiée de l'appareil d'automatisation (41, 81).

13. Procédé selon l'une des revendications 1 à 11, le certificat d'appareil (55, 86, 96) pouvant encore être utilisé pendant un temps prédéterminé, aux fins d'une authentification positive, conformément à une configuration non modifiée après une modification de la configuration de l'appareil d'automatisation (41, 81).

14. Appareil d'automatisation d'une installation d'automatisation comportant au moins un certificat d'appareil (55, 86, 96), l'appareil d'automatisation (41, 81) s'authentifiant vis-à-vis d'un partenaire d'authentification au moyen du certificat d'appareil (55, 86, 96) relié à des données de configuration de l'appareil d'automatisation (41, 81) spécifiques à l'appareil, l'appareil d'automatisation (41, 81) étant réalisé de manière telle que l'appareil d'automatisation (41, 81) détermine automatiquement, lors d'une ou après une modification de la configuration de l'appareil d'automatisation (41, 81), un certificat d'appareil (55, 86, 96) qui inclut des données de configuration spécifiques à l'appareil conformément à la configuration modifiée de l'appareil d'automatisation (41, 81) et les utilise ensuite aux fins de l'authentification, l'appareil d'automatisation (41, 81)
a) comportant plusieurs certificats d'appareil prédéfinis avec différentes données de configuration spécifiques à l'appareil
ou
b) comportant une unité de délivrance intégrée (57, 87)
ou
c) demandant, en cas de modification de la configuration, un certificat d'appareil (55, 86, 96) avec des données de configuration spécifiques à l'appareil conformément à la configuration modifiée à une unité de délivrance (57, 87) qui n'est pas contenue dans l'appareil d'automatisation (41, 81) lui-même.

15. Appareil d'automatisation selon la revendication 14, l'unité de délivrance (57) et une unité de commande pour commander le fonctionnement de l'appareil d'automatisation (41, 81), étant contenues respectivement dans une unité de mémoire distincte (61, 62), les unités de mémoire distinctes (61, 62) étant reliées par une unité de séparation (63).

16. Système d'actualisation d'un certificat d'appareil numérique (55, 86, 96) d'un appareil d'automatisation (41, 81) d'une installation d'automatisation comportant au moins un appareil d'automatisation (41, 81) et au moins une unité de délivrance (57, 87), l'appareil d'automatisation (41, 81) comportant au moins un certificat d'appareil (55, 86, 96) et s'authentifiant vis-à-vis d'un partenaire au moyen du certificat d'appareil (55, 86, 96) relié à des données de configuration de l'appareil d'automatisation (41, 81) spécifiques à l'appareil, l'appareil d'automatisation (41, 81) étant réalisé de telle sorte que l'appareil d'automatisation (41, 81) détermine automatiquement, lors d'une modification de la configuration de l'appareil d'automatisation (41, 81), un certificat d'appareil (55, 86, 96) qui inclut des données de configuration spécifiques à l'appareil conformément à la configuration modifiée de l'appareil d'automatisation (41, 81) et est ensuite utilisé à des fins d'authentification, et l'au moins une unité de délivrance (57, 87) étant réalisée de manière à délivrer un certificat d'appareil (55, 86, 96) avec des données de configuration spécifiques à l'appareil conformément à la configuration modifiée de l'appareil d'automatisation (41, 81),
l'appareil d'automatisation (41, 81)
a) comportant plusieurs certificats d'appareil prédéfinis avec différentes données de configuration spécifiques à l'appareil
ou
b) comportant une unité de délivrance qui est réalisée en tant qu'unité de délivrance intégrée (57, 87)
ou
c) demandant, en cas de modification de la configuration, un certificat d'appareil (55, 86, 96) avec des données de configuration spécifiques à l'appareil conformément à la configuration modifiée à une unité de délivrance (57, 87) qui n'est pas contenue dans l'appareil d'automatisation (41, 81) lui-même.
